# DEMANDE DE BREVET EUROPEEN

(11) **EP 2 301 473 A1**
(43) Date de publication de la demande: **30.03.2011**
(21) Numéro de dépôt: 10179355.2
(22) Date de dépôt: 24.09.2010
(51) Int. Cl.: A61C 8/00

(54) **Implant dentaire céramique en deux parties**

(30) Priorité: 25.09.2009 FR 0956640
(71) Demandeur: Paris Implants, 70150 Marnay (FR)
(72) Inventeur: Viboud, Mireille, 69310, Pierre Benite (FR); Ricloux, Benoît, 25170, Pelousey (FR)
(74) Mandataire: Grand, Guillaume

(57) **Abrégé**

Cet implant dentaire (1) comporte une partie intra-osseuse (2) et un pilier (3) respectivement réalisés par deux pièces allongées distinctes en céramique, qui sont adaptées pour être assemblées fixement dans le prolongement l'une de l'autre par une liaison mâle-femelle entre leurs extrémités longitudinales (4, 8) tournées l'une vers l'autre. Pour renforcer et stabiliser la fixation de la liaison entre les deux pièces de l'implant, les extrémités précitées sont respectivement pourvues de gorges de réserve de colle (47, 83), qui débouchent au moins partiellement l'une dans l'autre et qui sont remplies par une colle (9) apte à se solidifier lorsque la partie intra-osseuse et le pilier sont assemblés l'un à l'autre.

## Description

La présente invention concerne un implant dentaire.

L'invention s'intéresse plus particulièrement aux implants en céramique, réalisés sous la forme de deux pièces distinctes assemblées l'une à l'autre. L'une de ces pièces consiste en ce qu'on appelle usuellement la partie intra-osseuse, destinée à être implantée dans le tissus osseux de la mandibule ou du maxillaire, en général par vissage, tandis que l'autre pièce est usuellement appelée un pilier ou faux-moignon, à même d'être fixé sur la partie intra-osseuse de façon à s'étendre dans le prolongement, rectiligne ou incliné, de cette dernière, pour supporter une prothèse dentaire.

La liaison mécanique entre les extrémités en regard de la partie intra-osseuse et du pilier peut être à vis ou bien, comme envisagé dans WO-A-2007/039206, peut consister en un couplage par insertion « mâle dans femelle ».

FR-A-2 785 789, sur lequel est basé le préambule de la revendication 1 annexée, et DE-A-35 33 395 proposent de renforcer la liaison mâle-femelle entre la partie intra-osseuse et le pilier de leur implant dentaire, par un ou plusieurs joncs en forme de bagues fendues. Ces joncs sont des pièces rapportées, qui viennent se loger dans des gorges complémentaires délimitées dans la partie intra-osseuse et dans le pilier, en occupant intégralement le volume libre de ces gorges à des fins de calage mécanique. La mise en place de ces joncs rapportés complique la pose de l'implant dentaire.

De plus, dans tous les cas, on constate que la pérennité de la liaison mécanique précitée est limitée : en raison des efforts appliqués par la mâchoire sur l'implant, le pilier tend à se désolidariser de la partie intra-osseuse. Les difficultés de solidariser à demeure les deux pièces de l'implant sont aussi liées au fait que ces pièces sont en céramique, ce qui en limite les possibilités d'usinage, notamment pour des raisons de coût. Il en résulte qu'une solution connue pour contourner ce problème consiste à réaliser des implants en céramique monobloc, comme proposé dans WO-A-2006/108951.

Le but de la présente invention est de proposer un implant dentaire en deux pièces de céramique, dont la fixation de la liaison entre ces deux pièces est, de manière simple et fiable, renforcée et stable dans le temps. A cet effet, l'invention a pour objet un implant dentaire, tel que défini à la revendication 1.

L'idée à la base de l'invention est de renforcer la liaison entre la partie intra-osseuse en céramique et le pilier en céramique par de la colle, étant entendu que, ici, ce terme « colle » désigne des matières bien connues dans le domaine de l'implantologie dentaire, appelées également des ciments, et telles que les composites de collage dentaire autopolymérisants, commercialisés sous la marque déposée Multilink Automix (Ivoclar Vivadent). Toutefois, pour que la présence de cette colle soit signicativement efficace, l'invention propose d'interposer la colle entre les deux pièces céramiques de l'implant, en lui faisant remplir au moins une paire de gorges, respectivement délimitées par l'une et l'autre de ces deux pièces, au niveau de leur extrémité à même d'être couplée l'une à l'autre par insertion « mâle dans femelle ». Dans la configuration d'assemblage des deux pièces, les deux gorges de la ou chaque paire se trouvent en communication fluidique l'une avec l'autre de sorte que, lors de l'injection de colle entre les deux pièces, cette colle, à elle seule, vient remplir conjointement les deux gorges et s'y solidifie, en formant, en quelque sorte, un joint de retenue mécanique entre les deux pièces, pour empêcher le désengagement de leur liaison mâle-femelle. Autrement dit, la colle solidifiée dans les deux gorges assure un effet d'anti-cisaillement entre la partie intra-osseuse et le pilier, suivant leur direction longitudinale. L'invention permet ainsi une tenue efficace et pérenne du pilier vis-à-vis de la partie intra-osseuse.

D'autres caractéristiques avantageuses de l'implant dentaire conforme à l'invention, prises isolément ou selon toutes les combinaisons techniquement possibles, sont spécifiées aux revendications dépendantes 2 à 10.

L'invention sera mieux comprise à la lecture de la description qui va suivre, donnée uniquement à titre d'exemple et faite en se référant aux dessins sur lesquels :
- la figure 1 est une vue en perspective d'un implant conforme à l'invention, dans une configuration assemblée ;
- la figure 2 est une coupe longitudinale de l'implant de la figure 1, dans une configuration non encore assemblée ;
- les figures 3 et 4 sont des vues en élévation selon respectivement les flèches III et IV de la figure 2 ; et
- la figure 5 est une vue en coupe dans le plan de la figure 2, montrant seulement un détail de l'implant dans sa configuration assemblée.

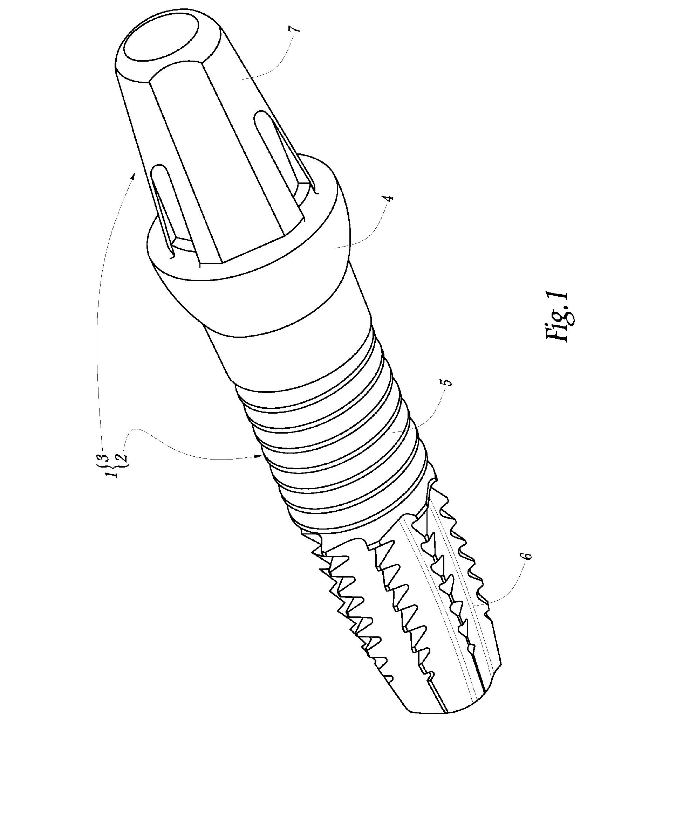

Sur les figures 1 à 5 est représenté un implant dentaire 1 qui comprend, voire, comme ici, consiste en deux pièces distinctes à même d'être assemblées fixement l'une à l'autre, à savoir une partie intra-osseuse 2 et un piler 3. Cette partie intra-osseuse 2 et ce pilier 3 sont réalisés en une céramique bio-compatible, notamment en zircone.

La partie intra-osseuse 2 présente une forme globale allongée, s'étendant de manière rectiligne autour d'un axe central X₂. Cette partie intra-osseuse comprend ainsi successivement, suivant cet axe X₂, une extrémité 4, qui est adaptée pour être fixée au pilier 3, comme expliqué en détail plus loin, une partie courante 5, et une extrémité 6 opposée à l'extrémité 4.

Extérieurement, l'extrémité 4, la partie courante 5 et l'extrémité 6 présentent avantageusement des aménagements identiques ou similaires à ceux proposés dans WO-A-2006/108951 auquel le lecteur pourra se reporter. Ainsi, la partie courante 5 présente, sur sensiblement toute sa longueur, un filetage extérieur 51 permettant de solidariser la partie intra-osseuse 2 à l'os mandibulaire ou maxillaire par vissage. De même, l'extrémité 6 est prévue auto-taraudeuse : elle présente une surface extérieure tronconique, centrée sur l'axe X₂ et divergente en s'éloignant de la partie courante 5, en étant munie de plusieurs encoches coupantes 61, qui sont réparties autour de l'extrémité 6, qui s'étendent chacune en longueur suivant la direction axiale de la partie 2 et qui présentent des discontinuités. Par ailleurs, l'extrémité 4 présente, dans sa partie tournée vers la partie courante 5, une surface extérieure lisse 41, en forme de tronc de cône centré sur l'axe X₂ et convergent en direction de la partie courante 5, avec un angle au sommet présentant une faible valeur, par exemple égal à 4° environ. Dans sa partie tournée à l'opposé de la partie courante 5, l'extrémité 4 présente une surface extérieure 42 sensiblement tronconique, centrée sur l'axe X₂ et convergente vers la surface 41, en étant légèrement bombée. L'angle au sommet de cette surface 42 est plus important que celui de la surface 41, les fonctions de ces surfaces 41 et 42 étant différentes : lorsque la partie intra-osseuse 2 est implantée dans l'os maxillaire ou mandibulaire, la surface 41 est prévue pour venir s'appliquer contre la corticale de cet os, assurant ainsi une bonne étanchéité de l'implantation pour limiter les risques de développement bactérien dans la matière osseuse sous-jacente, tandis que la surface 42 se trouve au contact de la gencive, à des fins d'étanchéité gingivale.

A la différence de la partie courante 5 et de l'extrémité 6, qui sont pleines, l'extrémité 4 est au moins en partie creuse. Plus précisément, cette extrémité 4 délimite un logement 43 qui s'étend à l'intérieur de l'extrémité 4 depuis son chant d'extrémité libre 44, en étant centré sur l'axe X₂. Le logement 43 débouche ainsi axialement sur l'extérieur au niveau du chant d'extrémité libre 44, tandis qu'il est fermé partout ailleurs par la céramique constituant l'extrémité 4.

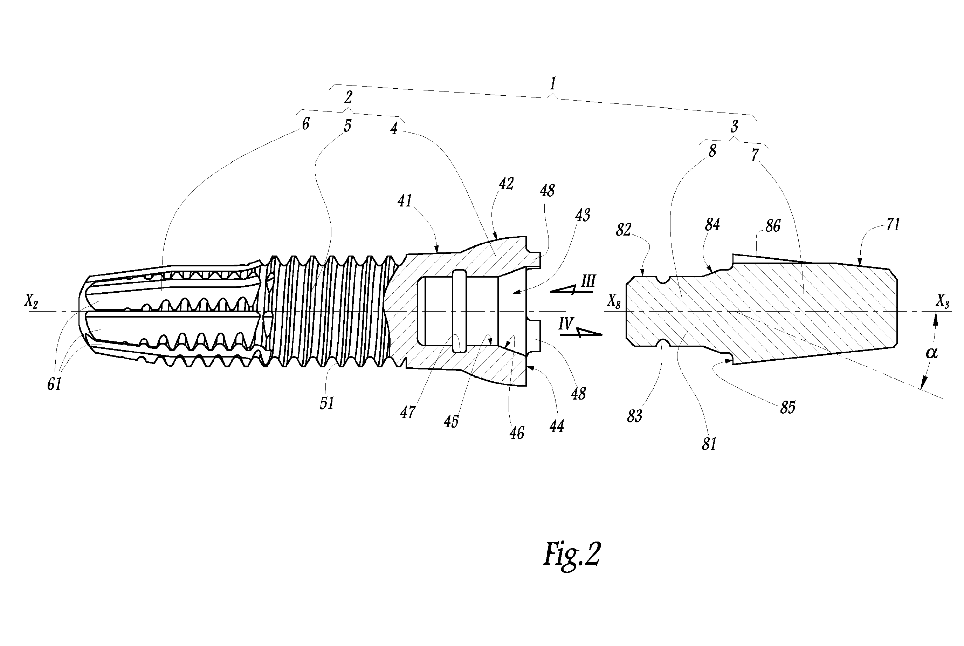

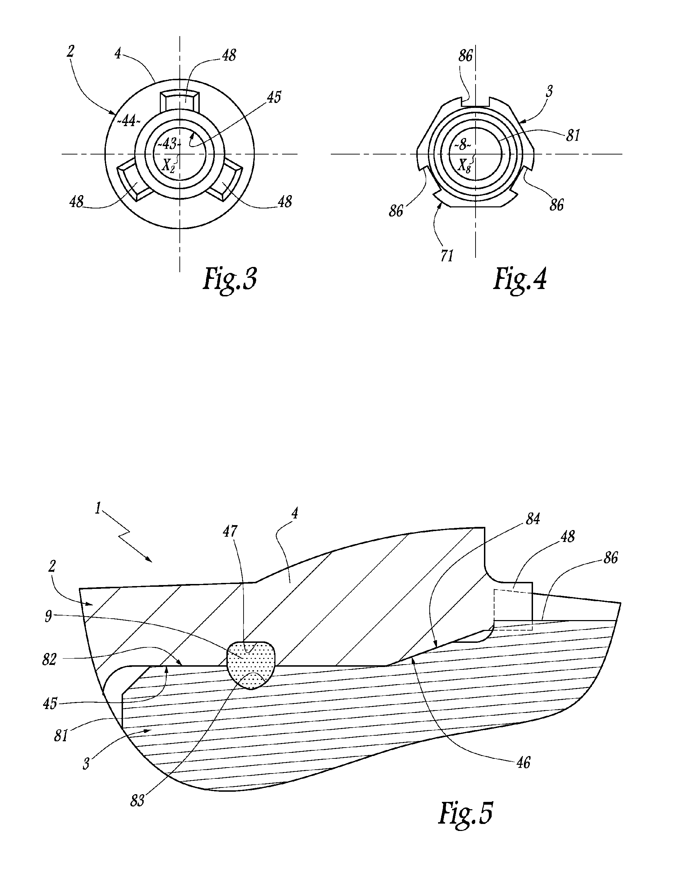

Comme bien visible sur les figures 2 et 3, ce logement 43 est étagé suivant l'axe X₂: dans sa partie tournée vers la partie courante 5, le logement 43 est délimité par une surface intérieure cylindrique 45, centrée sur l'axe X₂ et à base circulaire, tandis que, dans sa partie tournée vers le chant d'extrémité libre 44, le logement 43 est délimité par une surface intérieure tronconique 46, centrée sur l'axe X₂ et divergente vers l'extérieur.

Dans la partie intermédiaire, suivant l'axe X₂, de la surface cylindrique 45, voire, avantageusement comme ici, sensiblement au milieu de cette surface 45, est creusée une gorge annulaire 47 centrée sur l'axe X₂.

De plus, l'extrémité 4 est pourvue de picots 48, ici au nombre de trois, qui s'étendent chacun en saillie suivant la direction de l'axe X₂ depuis le chant d'extrémité libre 44, en étant venus de matière avec le reste de l'extrémité 4. Ces picots saillants 48 sont répartis de manière sensiblement uniforme autour de l'axe X₂, en étant ainsi disposés suivant le pourtour du débouché du logement 43, comme bien visible sur la figure 3.

Comme bien visible sur les figures 2 et 4, le pilier 3 présente une forme globale allongée, en incluant principalement un corps 7 extérieurement en forme globale de tronc de cône, centré sur un axe X₃. Sur son côté de plus grand diamètre qui, en service, est destiné à être tourné vers la partie intra-osseuse 2, le corps principal 7 est prolongé par un plot saillant 81 formant au moins en partie l'extrémité correspondante 8 du pilier 3. Le plot 81 s'étend en longueur autour d'un axe central X₈ qui, dans l'exemple de réalisation considéré sur les figures, est confondu avec l'axe X₃. Toutefois, plutôt que de présenter une forme rectiligne comme dans l'exemple de réalisation considéré ici, le pilier 3 peut présenter une forme longitudinale angulée, c'est-à-dire avec les axes X₃ et X₈ formant entre eux un angle α, comme indiqué en pointillés sur la figure 2.

Dans tous les cas, la surface extérieure 71 du corps 7 est prévue globalement tronconique, centrée sur l'axe X₃ et convergente à l'opposé de l'extrémité 8, étant remarqué qu'elle peut inclure plusieurs pans répartis suivant sa périphérie, comme dans l'exemple considéré sur les figures où ces pans sont au nombre de trois, comme bien visible sur la figure 4. Cette surface extérieure 71 est ainsi conformée pour supporter et retenir par emboîtement une prothèse dentaire additionnelle, non représentée.

Le plot 81 est conformé pour être reçu de manière sensiblement ajustée dans le logement 43 lors de l'assemblage de l'implant 1 : autrement dit, le plot 81 constitue un élément mâle d'une liaison mécanique dont l'élément femelle est le logement 43.

Plus précisément, le plot 81 délimite, dans sa partie opposée au corps 7, une surface extérieure cylindrique 82, centrée sur l'axe X₈ et à base circulaire. Cette surface 82 présente un diamètre extérieur ajusté sur le diamètre intérieur de la surface 45 de manière que la surface 82 peut être reçue de manière ajustée à l'intérieur de la surface 45, comme représenté sur la figure 5.

Dans sa partie intermédiaire suivant l'axe X₈, la surface 82 est creusée de manière à délimiter co-axialement une gorge annulaire 83, avantageusement située dans le milieu de la surface 82 comme dans l'exemple considéré sur les figures. Lorsque le plot 81 est reçu dans le logement 43, les gorges 47 et 83 se trouvent disposées en regard l'une de l'autre, suivant une direction radiale aux axes X₂ et X₈ alors sensiblement confondus.

De plus, le plot 81 délimite, dans sa partie tournée vers le corps 7, une surface extérieure 84 tronconique, centrée sur l'axe X₈ et convergente vers la surface 82. Cette surface 84 est dimensionnée de manière complémentaire à la surface tronconique 46 de manière que, lorsque le plot 81 est reçu dans le logement 43, ces surfaces 46 et 84 s'appuient l'une contre l'autre, en formant une interface de contact tronconique étanche.

Sur son côté tourné vers le corps 7, l'extrémité 8 est reliée à ce dernier en formant un épaulement 85 dans lequel sont délimitées trois cavités 86, réparties autour de l'axe X₈, comme bien visible sur la figure 4 : dans un plan de coupe transversal à l'axe X₈, chacune de ces cavités 86 présente un profil ajusté sur le profil extérieur, en coupe transversale à l'axe X₂, des picots 48. Il en résulte que, lorsque le plot 81 est reçu dans le logement 43, l'épaulement 85 vient se positionner à proximité immédiate du chant d'extrémité libre 44, de sorte que les picots 48 sont reçus dans les cavités 86 de manière ajustée. La coopération entre les picots 48 et les cavités 86 bloque la rotation relative entre la partie intra-osseuse 2 et le pilier 3 autour des axes alors confondus X₂ et X₈.

Un exemple de mise en place de l'implant 1 va maintenant être décrit.

Préalablement, on notera que, en pratique, le praticien dispose d'un jeu de plusieurs implants 1, présentant respectivement des tailles différentes, notamment en ce qui concerne le diamètre extérieur et la longueur de la partie intra-osseuse 2, ainsi que des angulations différentes entre cette partie intra-osseuse et le pilier 3, c'est-à-dire en ce qui concerne la valeur de l'angle précité α. A titre d'exemples numériques, une gamme possible pour les implants 1 consiste à disposer de deux séries de parties intra-osseuses 2 avec des diamètres extérieurs de leur partie courante 5 valant 4 et 5,3 mm tandis que la longueur de ces parties intra-osseuses 2 de chaque série vaut 10, 12 et 14 mm. Egalement à titre d'exemples numériques, pour chaque série de parties intra-osseuses 2, des piliers 3 sont mis à disposition avec l'angle α valant 0° ,9° et 18°, le cas échéant avec plusieurs longueurs possibles pour ces piliers.

Pour mettre en place l'implant 1, le praticien retire au trépan une pastille de gencive, pratique éventuellement d'abord un forage dans l'os avec un forêt-pilote de petit diamètre, puis pratique un forage dans l'os avec le forêt adapté en diamètre et en longueur à la partie intra-osseuse 2 choisie. Le cas échéant, une fois le forage effectué, le praticien affine sa sélection d'implant parmi le jeu disponible, en utilisant un jeu d'indicateurs d'angle pour rechercher un bon parallélisme entre le pilier 3 à implanter et les structures dentaires avoisinantes.

Après avoir ainsi choisi la partie intra-osseuse 2 et le pilier 3 parmi ceux à sa disposition, le chirurgien introduit la partie intra-osseuse 2 dans l'os, en la vissant dans le puits préalablement foré. Avantageusement, à cette fin, le chirurgien utilise un outil d'entraînement en rotation de la partie intra-osseuse 2, coopérant avec les picots 48. Le praticien visse à fond la partie intra-osseuse 2, jusqu'à ce que la surface 41 s'appuie contre la corticale de l'os.

Le cas échéant après une période de stabilisation de la partie intra-osseuse 2 au sein de l'os maxillaire ou mandibulaire, le chirurgien assemble le pilier 3 à la partie intra-osseuse, en engageant le plot 81 à l'intérieur du logement 43, jusqu'à venir appuyer l'une contre l'autre les surfaces tronconiques 46 et 84, comme représenté sur la figure 5. Cet assemblage conduit à l'engagement des picots 48 dans les cavités 86.

Lors de cet assemblage, le praticien injecte une colle 9, bien connue dans le domaine de l'implantologie dentaire et parfois appelée ciment, entre les extrémités 4 et 8. Cette colle est ainsi injectée de manière à remplir les gorges 47 et 83, comme représenté sur la figure 5, à l'exclusion de tout autre élément de fixation qui serait rapporté dans ces gorges 47 et 83. En se solidifiant, cette colle 9 forme un joint de retenue mécanique, suivant les axes confondus X₂ et X₈, entre les extrémités 4 et 8.

Suivant un dimensionnement préférentiel pour garantir des performances mécaniques élevées, la section transversale de chaque gorge 47 et 83 présente une dimension minimale supérieure à 0,1 mm. Cette dimension minimale est par exemple égale à 0,5 mm.

Pour renforcer l'effet d'anti-cisaillement dans le sens des axes X₂ et X₈ procuré par la colle solidifiée 9, il est préférable que les gorges 47 et 83 soient disposées en coïncidence l'une de l'autre dans la configuration assemblée de l'implant 1, comme montré sur la figure 5. Les dimensions, en coupe transversale, de la colle solidifiée 9 s'en trouvent en effet maximisées.

Divers aménagements et variantes à l'implant 1 décrit ci-dessus sont par ailleurs envisageables. A titre d'exemples :
- plusieurs paires de gorges, similaires à la paire des gorges 47 et 88, peuvent être prévues au niveau des extrémités 4 et 8 ;
- la structure mâle-femelle des extrémités 4 et 8 peut être inversée par rapport à celle considérée sur les figures ; autrement dit, à titre de variante non représentée, l'extrémité 8 du pilier 3 présente alors un logement analogue au logement 43 tandis que l'extrémité 4 de la partie intra-osseuse 2 forme un plot analogue au plot 81.

## Revendications

1. Implant dentaire (1), comportant une partie intra-osseuse (2) et un pilier (3) respectivement réalisés par deux pièces allongées distinctes en céramique, qui sont adaptées pour être assemblées fixement dans le prolongement l'une de l'autre par une liaison mâle-femelle entre leurs extrémités longitudinales (4, 8) tournées l'une vers l'autre,
**caractérisé en ce que** lesdites extrémités (4, 8) tournées l'une vers l'autre sont respectivement pourvues de gorges de réserve de colle (47, 83), qui débouchent au moins partiellement l'une dans l'autre et qui sont remplies par une colle (9) apte à se solidifier lorsque la partie intra-osseuse (2) et le pilier (3) sont assemblés l'un à l'autre.

2. Implant suivant la revendication 1, **caractérisé en ce que**, lorsque la partie intra-osseuse (2) et le pilier (3) sont assemblés l'un à l'autre, les gorges de réserve de colle (47, 83) sont sensiblement coïncidentes.

3. Implant suivant l'une des revendications 1 ou 2, **caractérisé en ce que** chaque gorge de réserve de colle (47, 83) présente une section transversale dont la dimension minimale est supérieure à 0,1 mm.

4. Implant suivant l'une quelconque des revendications précédentes, **caractérisé en ce que** l'une (4) des extrémités (4, 8), tournées l'une vers l'autre, de la partie intra-osseuse (2) et du pilier (3) délimite un logement (43) de réception complémentaire d'un plot saillant (81) délimité par l'autre (8) desdites extrémités, et **en ce que** les gorges de réserve de colle (47, 83) sont délimitées respectivement suivant la périphérie intérieure de ce logement et suivant la périphérie extérieure de ce plot.

5. Implant suivant la revendication 4, **caractérisé en ce que** le logement (43) et le plot (81) présentent des surfaces cylindriques complémentaires, respectivement intérieure (45) et extérieure (82), dans lesquelles les gorges de réserve de colle (47, 83) sont délimitées en creux.

6. Implant suivant la revendication 5, **caractérisé en ce que** chaque gorge de colle (47, 83) présente une forme annulaire centrée sur l'axe (X₂, X₈) desdites surfaces cylindriques (45, 82).

7. Implant suivant l'une des revendications 5 ou 6, **caractérisé en ce que** les gorges de réserve de colle (47, 83) sont positionnées, suivant l'axe (X₂, X₈) desdites surfaces cylindriques (45, 82), sensiblement au milieu de ces surfaces cylindriques.

8. Implant suivant l'une quelconque des revendications 4 à 7, **caractérisé en ce que** le logement (43) présente, à son débouché, une surface intérieure tronconique (46) divergente vers l'extérieur, contre laquelle une surface extérieure complémentaire (84), délimitée par le plot (81), s'appuie de manière étanche lorsque la partie intra-osseuse (2) et le pilier (3) sont assemblés l'un à l'autre.

9. Implant suivant l'une quelconque des revendications précédentes, **caractérisé en ce que** les extrémités (4, 8), tournées l'une vers l'autre, de la partie intra-osseuse (2) et du pilier (3) sont pourvues de reliefs respectifs complémentaires (48, 86), qui, lorsque la partie intra-osseuse et le pilier sont assemblés l'un à l'autre, sont adaptés pour bloquer ces derniers l'un par rapport à l'autre en rotation autour de leur direction longitudinale.

10. Implant suivant l'une quelconque des revendications 4 à 8 combinée à la revendication 9, **caractérisé en ce que** lesdits reliefs comportent des picots saillants (48), associés solidairement au logement (43), en étant répartis autour du débouché de ce logement, ces picots étant adaptés pour, lorsque la partie intra-osseuse (2) et le pilier (3) sont assemblés l'un à l'autre, être reçus et immobilisés par ajustement de formes dans des cavités (86) associées solidairement au plot (81).
